# EUROPEAN PATENT SPECIFICATION

(11) **EP 0 680 181 B1**
(45) Date of publication and mention of the grant of the patent: **19.02.2003**
(21) Application number: 95102949.5
(22) Date of filing: 02.03.1995
(51) Int. Cl.: H04L 12/56

(54) **Improvements in or relating to ATM switching systems**
Verbesserungen in ATM-Vermittlungssystemen
Améliorations apportées à des systèmes de commutation ATM

(30) Priority: 25.03.1994 GB 9405991
(43) Date of publication of application: 02.11.1995
(73) Proprietor: ROKE MANOR RESEARCH LIMITED, Romsey, Hampshire, SO51 0ZN (GB); Siemens Aktiengesellschaft, 80506 München (DE)
(72) Inventor: Hayter, Andrew Timothy, Bitterne Park, Southampton S02 4LN (GB); Fischer, Wolfgang, D-82110 Germering (DE); Davis, Simon Paul, Romsey, Hampshire S051 7LX (GB); Worster, Thomas, D-80796 Munich (DE)
(74) Representative: Morgan, Marc

(56) References cited:
- EUROPEAN TRANSACTIONS ON TELECOMMUNICATIONS AND RELATED TECHNOLOGIES, vol. 3, no. 2, March 1992 MILANO IT, pages 145-155, R. MELEN 'Current architectures for ATM implementation'
- GLOBECOM '93, vol. 2, December 1993 USA, pages 778-782, F. FAN ET AL. 'Performance evaluation of a source service node architecture under random traffic.'

## Description

This invention relates to asynchronous transfer mode (ATM) switching systems.

Considering firstly some technical background, ATM networks and switches are required to support a mixture of traffic including bursty traffic. By its nature bursty traffic requires a high bit rate for part of the time and little or no bit rate for the rest of the time. In order to efficiently use the bit rate available in the network, it is necessary to allocate to a connection a lower bit rate than its peak bit rate such that the total peak bit rate of all connections is greater than the bit rate of the network links.

ATM cells destined for a particular output port will enter a switch from many different input ports. The total instantaneous ATM cell flow rate of these may be greater than the output port rate of an ATM switching network (ASN) can sustain, thus a temporary overload of the output port may occur. The probability of this overload may be reduced to an operationally acceptable level by reducing the output port average load, but this results in a low utilisation of the network which is not usually acceptable. In an alternative approach, as described in GB-A-2 288 095 (corresponding to our co-pending application GB 9405700.7), large flow controlled buffers can be included in the ATM switch which serve to buffer the overload of cells causing them to be delayed so that they can be transmitted at the link rate.

The invention as just before referred to, and which forms the subject of GB-A-2 288 095, is concerned with a system wherein buffers are placed at the input and output of a core ATM switch and flow control is used to manage the cells flowing between these buffers. Attention is also directed to GB-A-2 268 372, GB-A-2 272 820 and GB-A-2 288 096 (corresponding to our other co-pending patent applications GB 9212447.8, GB 9322744.5 and 9309468.8, and GB 9405704.9) which provide useful background information.

Although, a system as described in GB-A-2 288 095, which involves the use of buffers and flow control to serve all parts of the switch, is operationally satisfactory and can be justified when large amounts of bursty traffic are present, when the amount of bursty data traffic is small, the cost of using flow controlled buffers at each input and output may be unacceptably large. It is therefore an object of the present invention to provide a system which is cost effective in situation where the amount of bursty data traffic is relatively small.

According to the present invention there is provided, an ATM switching system comprising:-
a plurality of input ports;
a plurality of output ports; and
a plurality of multiplexing units for facilitating the transmission of ATM cells between the input ports and the output ports;
characterised in that at least one of said multiplexing units comprises a server statistical multiplexing unit having at least one flow controller for controlling the flow between those input ports and those output ports having buffers and flow control and those input ports and those output ports which do not have buffers and flow control.

The ATM switching system may be used to provide communication between a plurality of links, wherein at least one of the links includes a statistical multiplexing unit which embodies buffering and flow control, the said switching system being operatively associated with at least one server SMU, which facilitates the transmission of ATM cells between links which do have buffers and flow control, and links which do not have buffers and flow control.

In one embodiment of the invention, the ATM switching system may be used to provide communication between a plurality of trunk links, and a plurality of customer links, wherein at least one of the trunk links includes a statistical multiplexing unit which embodies buffering and flow control, and/or wherein at least one of the customer links includes a statistical multiplexing unit which includes buffering and flow control, the said switching system being operatively associated with at least one server SMU, which facilitates the transmission of ATM cells between trunk links which do have buffers and flow control, and customer links which do not have buffers and flow control.

One embodiment of the invention will now be described by way of example only with reference to the accompanying drawings, in which:
FIGURE 1 is a generally schematic block diagram of an ATM switching network system;
FIGURE 2 is a schematic flow diagram showing the route of ATM cell traffic from trunk links to customer links in one direction; and wherein,
FIGURE 3 is a schematic flow diagram showing the route of ATM traffic from customer links to trunk links in the opposite direction.

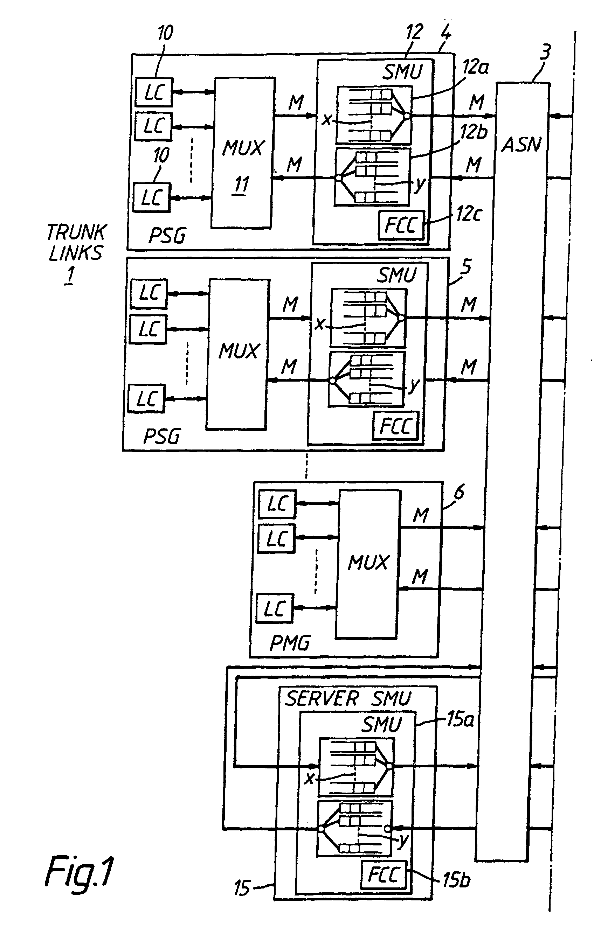

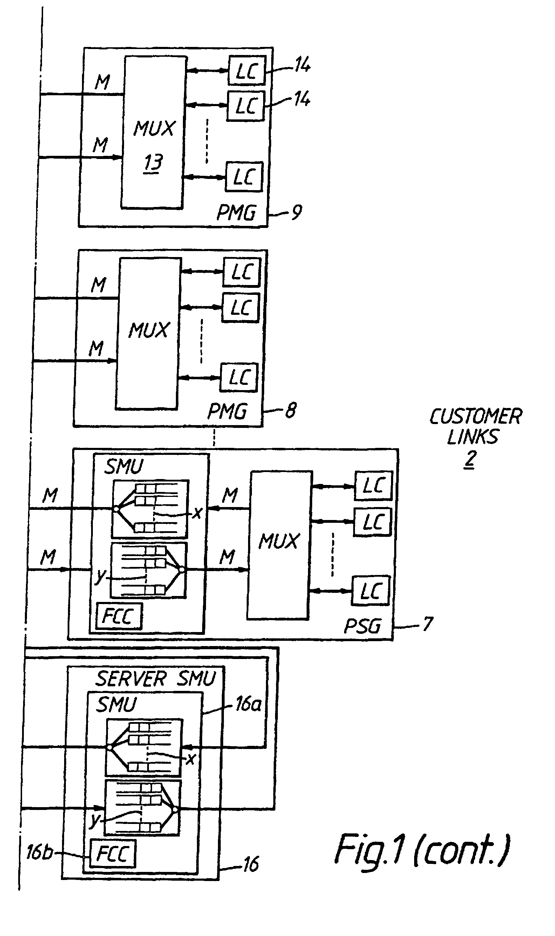

Referring now to Figure 1, a system is shown for the transmission of ATM cells between trunk links 1 and customer links 2, via an ATM switching network 3. In the present example, the trunk links 1, include two peripheral switch groups (PSG's) 4 and 5 which include buffering and flow control apparatus, and one peripheral multiplexing group (PMG) 6 which includes no such buffering and flow control apparatus. The customer links 2 on the other hand, comprise one PSG 7 which has buffering and flow control apparatus and two PMG's 8 and 9 which have no such buffering and flow control apparatus. As can be seen from Figure 1, the PSG's 4, 5 and 7 are similar and include line cards 10, a multiplexer 11 and a statistical multiplexing unit 12 having buffering apparatus 12a and 12b and flow control apparatus 12c.

The PMG's 6, 8 and 9 on the other hand merely comprise a multiplexer 13 and line cards 14 with no unit corresponding to the statistical multiplexing unit 12a which includes buffering and flow control apparatus.

In order to facilitate communication between the PSG's 4, 5 and 7 which have buffering and flow control, and the PMG's 6, 8 and 9 which do not have buffering and flow control, server statistical multiplexing units (server SMU's) 15 and 16 are provided, including statistical multiplexing units 15a and 16a respectively and flow controllers 15b and 16b respectively. In operation of the system, when communication is required between a PSG having buffering and flow control and a PMG having no buffering and flow control, ATM cells are routed via one or other of the server SMU's 15 or 16.

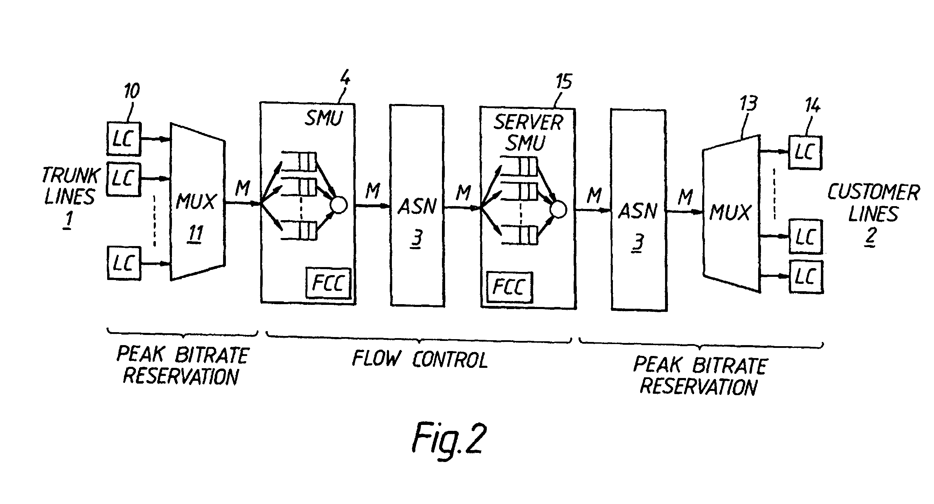

The route taken by ATM cell traffic from trunk links 1 to customer links 2, via a server SMU is shown in Figure 2, wherein parts corresponding to Figure 1 bear where appropriate the same alphabetic or numerical designations. From Figure 2, it can be seen that ATM cells from the line cards 10 are transmitted via the SMU 4 and ASN 3 to the server 15 and then back through the ASN 3 to the MUX 13 and the line cards 14.

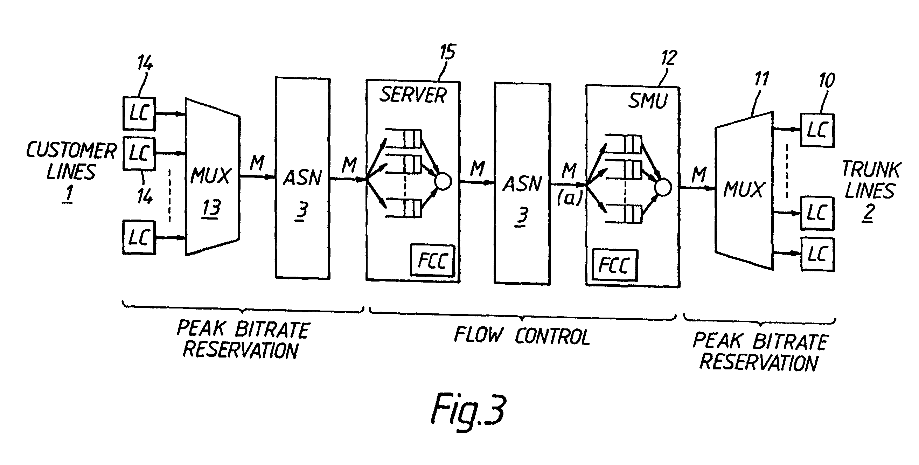

Referring now to Figure 3, traffic in the opposite direction from customer links 2 to trunk links 1 is shown. It can be seen from Figure 2 and Figure 3 that for transmission from the trunk links 1 to the customer links 2, flow control obtains between the units 3, 4 and 15 whereas for transmission in the opposite direction from the customer links 2 to the trunk links 1, flow control obtains between the units 15, 3 and 12, peak bit rate reservation obtaining over other parts of the transmission path in each case.

An important advantage of the present invention lies in the ability of the system to allow flow controlled statistical gain to maximise the utilisation of the trunk links 1, while not having to use SMU's within all PSG's. The reason that the MUX or LC components cannot have flow control added without the large buffers, is that as shown in Figure 3, for example, a point (a) between the ASN 3 and the SMU 12, may instantaneously receive more bandwidth than it can handle. The server SMU's however, can be used to accept this overload bandwidth and re-route the traffic afterwards to correct the output.

Various modifications may be made to the arrangement shown without departing from the scope of the invention and for example, any number of trunk or customer links may be provided, which are placed in mutual communication across an ATM switching network, and for some applications, trunk links may be coupled to other trunk links or customer links may be interconnected using a system in accordance with the present invention.

## Claims

1. An ATM switching system comprising:-
a plurality of input ports;
a plurality of output ports; and
a plurality of multiplexing units (4, 5, 6, 7, 8, 9, 15, 16) for facilitating the transmission of ATM cells between the input ports and the output ports;
**characterised in that** at least one of said multiplexing units (4, 5, 6, 7, 15, 16) comprises a server statistical multiplexing unit (12, 12a, 12b, 12c, 15, 15a, 15b, 16, 16a, 16b) having at least one flow controller (12c, 15b, 16b) for controlling the flow between those input ports and those output ports having buffers and flow control and those input ports and those output ports which do not have buffers and flow control.

2. An ATM switching system as claimed in Claim 1, which is used to provide communication between a plurality of links (1, 2), at least one of the links (1, 2) including a server statistical multiplexing unit (12, 12a, 12b, 12c, 15, 15a, 15b, 16, 16a, 16b) which embodies buffering and flow control, said switching system being operatively associated with at least one server statistical multiplexing unit (12, 12a, 12b, 12c, 15, 15a, 15b, 16, 16a, 16b) which facilitates the transmission of ATM cells between links which do have buffers and flow control and links which do not have buffers and flow control.

3. An ATM switching system as claimed in Claim 2, wherein the ATM switching system is used to provide communication between a plurality of trunk links (1) and a plurality of customer links (2), wherein at least one of the trunk links (1) includes a statistical multiplexing unit which embodies buffering and flow control, and/or wherein at least one of the customer links (2) includes a statistical multiplexing unit which includes buffering and flow control, said switching system being operatively associated with at least one server statistical multiplexing unit (12, 12a, 12b, 12c, 15, 15a, 15b, 16, 16a, 16b) which facilitates the transmission of ATM cells between trunk links (1) which do have buffers and flow control operatively associated therewith and customer links (2) which do not have buffers and flow control operatively associated therewith.

## Patentansprüche

1. ATM-Vermittlungssystem bestehend aus:
- einer Vielzahl von Eingangsanschlüssen
- einer Vielzahl von Ausgangsanschlüssen und
- einer Vielzahl von Multiplexeinheiten (4, 5, 6, 7, 8, 9, 15, 16), um die Übertragung von ATM-Zellen zwischen den Eingangs- und Ausgangsanschlüssen zu ermöglichen;
und **dadurch gekennzeichnet, dass** mindestens eine der genannten Multiplexeinheiten (4, 5, 6, 7, 15, 16) eine Server-SMU (12, 12a, 12b, 12c, 15, 15a, 15b, 16, 16a, 16b) beinhaltet, die über mindestens eine Einrichtung zur Flusskontrolle (12c, 15b, 16b) verfügt, um den Datenfluss zwischen Eingangs- und Ausgangsanschlüssen mit Puffern und Flusskontrolle einerseits und Eingangs- und Ausgangsanschlüssen ohne Puffer und Flusskontrolle andererseits zu steuern.

2. ATM-Vermittlungssystem gemäß Anspruch 1, das verwendet wird, um die Kommunikation zwischen einer Vielzahl von Leitungen (1, 2) zu ermöglichen, wobei mindestens einer der Leitungen (1, 2) eine Server-SMU (12, 12a, 12b, 12c, 15, 15a, 15b, 16, 16a, 16b) einschließt, die Puffer und Flusskontrolle enthält. Das genannte Vermittlungssystem ist im Betrieb mit mindestens einer Server-SMU (12, 12a, 12b, 12c, 15, 15a, 15b, 16, 16a, 16b) verbunden, die die Übertragung von ATM-Zellen zwischen Leitungen mit Puffern und Flusskontrolle und Leitungen ohne Puffer und Flusskontrolle ermöglicht.

3. ATM-Vermittlungssystem gemäß Anspruch 2, wobei das ATM-Vermittlungssystem verwendet wird, um die Kommunikation zwischen einer Vielzahl von Amtsleitungen (1) und einer Vielzahl von Teilnehmerleitungen (2) zu ermöglichen, wobei mindestens eine der Amtsleitungen (1) eine statistische Multiplexeinheit einschließt, die Puffer und Flusskontrolle enthält, und/oder wobei mindestens eine der Teilnehmerleitungen (2) eine statistische Multiplexeinheit einschließt, die Puffer und Flusskontrolle enthält. Das genannte Vermittlungssystem ist im Betrieb mit mindestens einer Server-SMU (12, 12a, 12b, 12c, 15, 15a, 15b, 16, 16a, 16b) verbunden, die die Übertragung von ATM-Zellen zwischen Amtsleitungen (1) mit Puffern und operativ damit verbundener Flusskontrolle einerseits und Teilnehmerleitungen (2) ohne Puffer und operativ damit verbundener Flusskontrolle andererseits ermöglicht.

## Revendications

1. Système de commutation ATM, comprenant :
une pluralité de ports d'entrée ;
une pluralité de ports de sortie ; et
une pluralité d'unités de multiplexage (4, 5, 6, 7, 8, 9, 15, 16) destinées à faciliter la transmission de cellules ATM entre les ports d'entrée et les ports de sortie ;
**caractérisé en ce qu'**au moins l'une des unités de multiplexage (4, 5, 6, 7, 15, 16) comprend une unité de multiplexage statistique serveuse (12, 12a, 12b, 12c, 15, 15a, 15b, 16, 16a, 16b) ayant au moins une unité de commande de débit (12c, 15b, 16b) pour commander le débit entre les ports d'entrée et les ports de sortie qui comportent des tampons et une commande de débit et les ports d'entrée et les ports de sortie qui ne comportent pas de tampons ni de commande de débit.

2. Système de commutation ATM suivant la revendication 1, qui est utilisé pour permettre des communications entre une pluralité de liaisons (1, 2), au moins l'une des liaisons (1, 2) comportant une unité de multiplexage statistique serveuse (12, 12a, 12b, 12c, 15, 15a, 15b, 16, 16a, 16b) qui met en oeuvre une mise en tampon et une commande de débit, le système de commutation étant fonctionnellement associé à au moins une unité de multiplexage statistique serveuse (12, 12a, 12b, 12c, 15, 15a, 15b, 16, 16a, 16b) qui facilite la transmission de cellules ATM entre des liaisons qui comportent des tampons et une commande de débit et des liaisons qui ne comportent pas de tampons ni de commande de débit.

3. Système de commutation ATM suivant la revendication 2, dans lequel le système de commutation ATM est utilisé pour effectuer des communications entre une pluralité de liaisons interurbaines (1) et une pluralité de liaisons de clients (2), dans lequel au moins l'une des liaisons interurbaines (1) comporte une unité de multiplexage statistique qui met en oeuvre une mise en tampon et une commande de débit, et/ou dans lequel au moins l'une des liaisons de clients (2) comporte une unité de multiplexage statistique qui comprend une mise en tampon et une commande de débit, ledit système de commutation étant fonctionnellement associé à au moins une unité de multiplexage statistique serveuse (12, 12a, 12b, 12c, 15, 15a, 15b, 16, 16a, 16b) qui facilite la transmission de cellules ATM entre des liaisons interurbaines (1) qui comportent des tampons et une commande de débit fonctionnellement associés à celles-ci et des liaisons de clients (2) qui ne comportent pas de tampons ni de commande de débit fonctionnellement associés à celles-ci.
